(19) Europäisches Patentamt
European Patent Office
Office européen des brevets

(11) **EP 1 956 470 A1**

(12) **EUROPEAN PATENT APPLICATION**

(43) Date of publication:
**13.08.2008 Bulletin 2008/33**

(51) Int Cl.:
***G06F 3/046*** (2006.01)

(21) Application number: **07002883.2**

(22) Date of filing: **11.02.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Waltop International Corp.**
**Hsinchu Park**
**Hsin-Chu (TW)**

(72) Inventors:
• **Yeh, Chia-Jui**
**Hsin-Chu (TW)**
• **Chu, Hang-Hui**
**Hsin-Chu (TW)**

(74) Representative: **Gee, Steven William**
**D.W. & S.W. GEE,**
**1 South Lynn Gardens,**
**London Road**
**Shipston on Stour,**
**CV36 4ER (GB)**

(54) **Large-sized electromagnetic digital board with segmented frame antenna**

(57) A large-sized electromagnetic digital broad with segmented frame antenna is provided, including at least an antenna turning board, at least an antenna multiplexer board, a physical antenna web, and a control board. The length of the antenna turning board is he same as the length of the antenna multiplexer board. The antenna turning boards and the antenna multiplexer boards are arranged to form a segmented frame antenna. The length and the width of the assembled large-sized digital board are a multiple of the length of the antenna turning board. Therefore, the size of the assembled digital board is not limited to any specific size, and is not limited by the size of the manufacturing machines.

**FIG. 2**

EP 1 956 470 A1

**Description**

**FIELD OF THE INVENTION**

The present invention generally relates to a large-sized electromagnetic board with segmented frame antenna, and provides a large-sized digital board by an assembly of segmented antenna circuit boards.

**BACKGROUND OF THE INVENTION**

The conventional electromagnetic digital board is usually made up of an electromagnetic pen and a writing board. The writing board usually includes the following circuits: a two-dimensional antenna, an analog signal amplifier, a signal filter, a frequency-computing circuit, and a microprocessor.

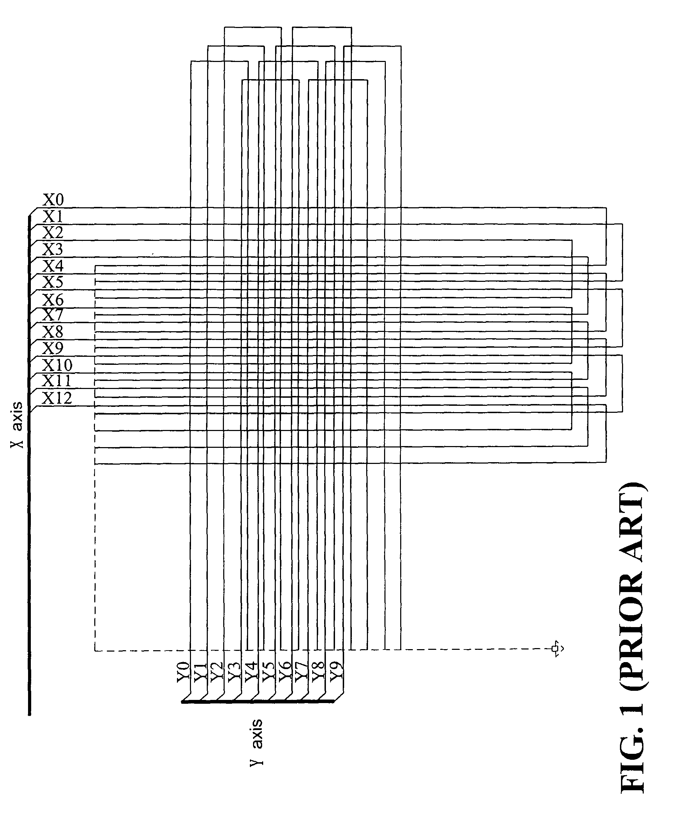

This type of writing board is usually made of an FR1 or FR4 glass fiber substrate, or a thin film of PET, PVC or PS as the substrate. On the substrate, there is an array of antennas arranged in X-axis and Y-axis loops. The two-dimensional antenna loops determines the size of the writing board. FIG. 1 shows a conventional two-dimensional antenna loops. The antenna loops are printed on the printed circuit board (PCB), and the X-axis antennas (x0-x12), and the Y-axis antennas (y0-y9) are printed on different planes for routing, and with via holes for inter-crossing.

The conventional digital board usually uses more loops to obtain more induced current when larger signals are required. However, this poses a routing problem on the PCB, especially when the PCB is only double-sided where more loops imply more horizontal deviation and higher errors in computing the coordinates of the digital board. This can be improved by using a four-layer or six-layer board. But the more layers of a board result in the problem of complicated routing and expensive design and manufacturing.

In addition, the PCB manufacturing machine, planar screen printing machine and blow heating machine, and the cutting machine that are current in use are of limited size. In general, the above machines can only manufacture a circuit board smaller than 60cm x 60cm. Hence, the digital board is usually limited to that size.

The conventional approach to manufacture a digital board larger than 60cm x 60cm is to use a plurality of smaller circuit board arranged horizontally to form a larger area. However, this approach ahs the disadvantage of exponential manufacturing cost. For example, the cost for a 120cm x120cm board is four times of the manufacturing cost of a 60cm x 60cm board. Also, the larger size and the more loops imply more multiplexers. As the multiplexers are controlled by the microprocessor, the design becomes complicated and the manufacturing cost is increased.

**SUMMARY OF THE INVENTION**

The present invention has been made to overcome the above-mentioned drawback of conventional large-sized digital board. The primary object of the present invention is to provide a large-sized electromagnetic board with segmented frame antenna. By using the segmented frame antenna, the PCS size can be reduced, and the size of digital board can be extended, while lowering the manufacturing cost.

To achieve the above object, the present invention provides a large-sized electromagnetic digital broad with segmented frame antenna, including at least an antenna turning board, at least an antenna multiplexer board, a physical antenna web, and a control board.

The antenna turning board provides a plurality of solder points for the wires to turn around, and uses a single wire to form a closed loop. The antenna multiplexer board includes a plurality of evenly spaced solder points, logic circuit, array antenna selector, a plurality of multiplexers, and an induced current input/output circuit. The physical antenna web is a two-dimensional evenly spaced antenna array formed by using a single core or multi-core wire to route between the antenna turning boards and antenna multiplexer boards. The control board includes the control circuit and a microprocessor.

The antenna turning boards, the antenna multiplexer boards, the physical antenna web and the control board are connected by connectors, directly soldered, or pressed to form connections.

The circuit layouts on all antenna turning boards are identical so that the antenna turning boards can be arranged in non-specific order. Similarly, the antenna multiplexer boards can also be arranged in any order. The length of the antenna turning board is he same as the length of the antenna multiplexer board. The antenna turning boards and the antenna multiplexer boards are arranged to form a segmented frame antenna. The length and the width of the assembled large-sized digital board are a multiple of the length of the antenna turning board. Therefore, the size of the assembled digital board is not limited to any specific size, and is not limited by the size of the manufacturing machines. In addition, the circuit on the antenna multiplexer board includes a logic circuit and a plurality of multiplexers to implement a multiplexer array antenna selector. This further reduces the routing of the control board, and reduces the manufacturing cost.

The foregoing and other objects, features, aspects and advantages of the present invention will become better understood from a careful reading of a detailed description provided herein below with appropriate reference to the accompanying drawings.

## BRIEF DESCRIPTION OF THE DRAWINGS

The present invention can be understood in more detail by reading the subsequent detailed description in conjunction with the examples and references made to the accompanying drawings, wherein:

FIG. 1 shows a schematic view of a conventional two-dimensional array antenna;

FIG. 2 shows a schematic view of a large-sized electromagnetic digital board with segmented frame antenna of the present invention;

FIG. 3 shows an embodiment of the layout of an antenna multiplexer board of the present invention;

FIG. 4 shows a schematic view of control board controlling an antenna multiplexer board to receive signals;

FIG. 5 shows a schematic view of an embodiment the loop of antenna turning boards;

FIG. 6 shows a schematic view of an embodiment describing two neighboring antenna turning boards having reserved solder points for connecting the antenna cutting; and

FIG. 7 shows a schematic view of the correspondence between antenna turning boards and antenna multiplexer boards for assembly of the present invention.

## DETAILED DESCRIPTION OF THE PREFERRED EMBODIMENTS

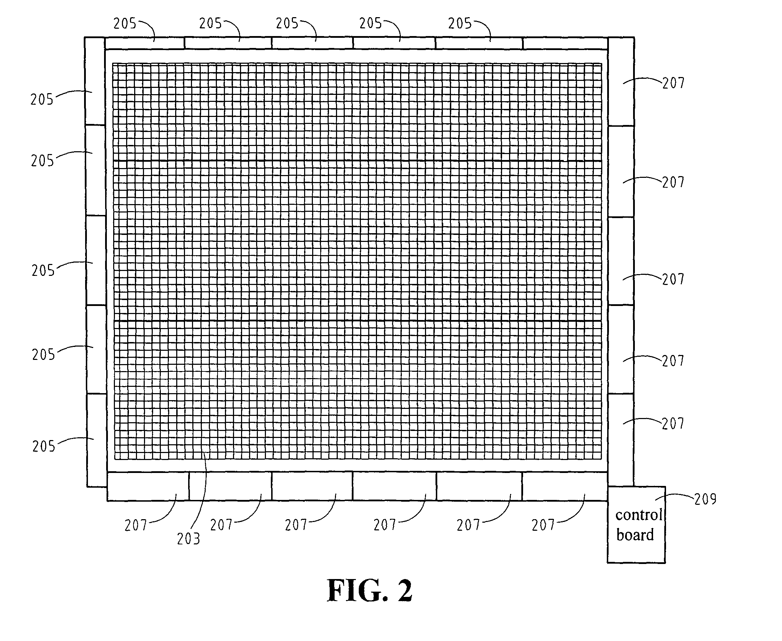

FIG. 2 shows a schematic view of a large-sized electromagnetic digital board with segmented frame antenna. As shown in FIG. 2, a large-sized digital board 201 of the present invention includes at least an antenna turning board 205, at least an antenna multiplexer board 207, a physical antenna web 203, and a control board 209.

Antenna turning board 205 provides a plurality of solder points for the wire to turn around, and allows a single wire to form a closed loop to induce the current. Antenna multiplexer board 207 includes a plurality of evenly spaced solder points corresponding to the solder points of antenna turning boards for wire alignment, and a logic circuit, array antenna selector, an induced current input/output circuit, and a plurality of multiplexers.

Physical antenna web 203 is a two-dimensional evenly spaced antenna array formed by using a single core or multi-core wire to route between the solder points of antenna turning boards 205 and antenna multiplexer boards 207. Antenna turning boards 205 and antenna multiplexer boards 207 are evenly distributed around the edges of physical antenna web 203 to form the frame for physical antenna web 203. Physical antenna web 203 senses the electromagnetic field of the electromagnetic pen, and control board 209 receives and amplifies the induced current to realize large-sized digital board with segmented frame antenna 201.

Without the loss of generality, control board 209 includes a control circuit and a microprocessor. Control board 209 can be further designed to include the following peripheral circuits and function: analog signal amplifier, signal filter, frequency computing circuit, DRAM, flash memory, USB interface, and SD/MMC memory card slot. Control board also includes an impedance matching circuit to receive the induced current from the two-dimensional array antenna.

The antenna turning boards, antenna multiplexer boards, physical antenna web and the control boards of the present invention can be connected by connectors, directly soldered, or pressed fo connections. Hence, by serially connecting the corresponding antenna turning boards and antenna multiplexer boards, the physical antenna web can be formed by routing a physical wire. Therefore, the size of the digital board is not limited by the actual size of a PCB, and a large-sized digital board can be realized.

Because the multiplexers are for controlling the selection of an antenna in the two-dimensional array antenna of physical antenna web 203, the multiplexers are placed between the two-dimensional array antenna and the signal amplifier as an ON/OFF valve. The present invention divides the multiplexers requires for large-sized digital board 201 into groups and allocates the groups to antenna multiplexer boards 207. When the multiplexers are evenly allocated to antenna multiplexer boards 207, each antenna multiplexer board 207 will have the same layout so that antenna multiplexer boards can be re-utilized, and arranged in non-specific order to form a large-sized digital board of any size.

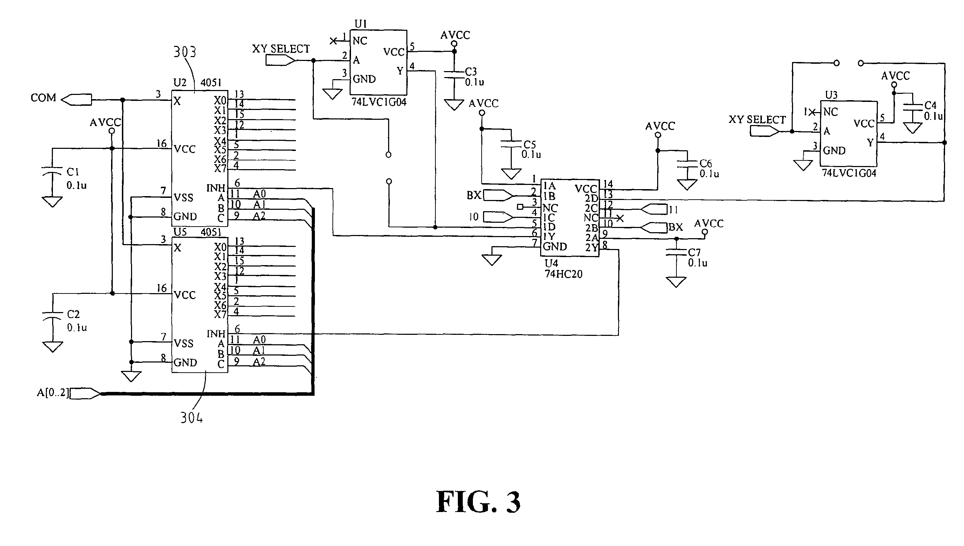

For example, if a large-sized digital board has 160 X-axis antenna loops, and each multiplexer has 8 I/O channels, the X-axis frame requires 20 multiplexers. If the 20 multiplexers are allocated to 10 antenna multiplexer boards, each antenna multiplexer board has 2 multiplexers. FIG. 3 shows an embodiment of the layout of 2-multiplexer antenna multiplexer boards 303, 304 and related logic circuit.

The 10 antenna multiplexer boards have the identical layout. The distance between the antenna solder points can be computed as follows:

$$\text{Solder point distance} = \text{antenna loop width} / \text{loop multiplicity}$$

The loop multiplicity determines the number of divisions of an antenna loop, and determines the total number of antennas along an axis, which is (operating region length/solder point distance)+2.

The solder points and the multiplexers are allocated according to the above computation, so that the antenna multiplexer boards are identical and can be reutilized and rearranged to for digital board of any size.

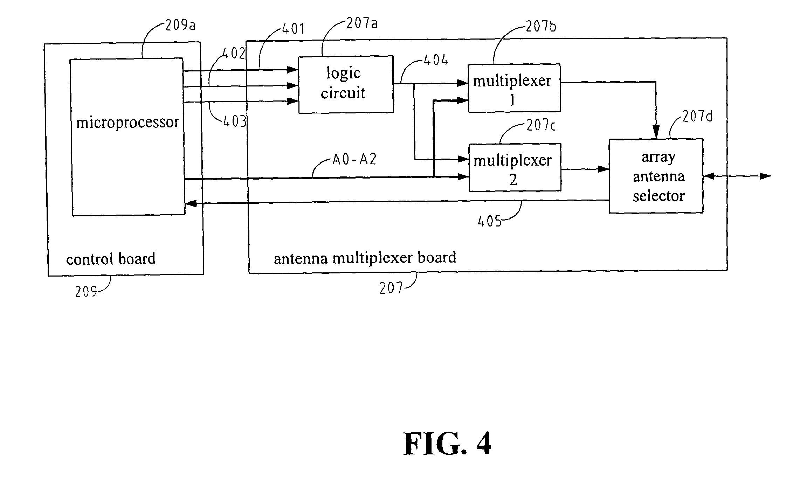

FIG. 4 shows a schematic view of control board using an antenna multiplexer board for receiving signals. As shown in FIG. 4, microprocessor 209a of control board 209 further includes three control lines 401-403, and address lines A0-A2 for controlling an antenna multiplexer board 207. Antenna multiplexer board 207 further includes a logic circuit 207a, two 3-to-8 multiplexers 207b, 207c, and an array antenna selector 207d.

Control lines 401-403 of control board 209 further includes an X/Y selection control line 401, a multiplexer selection control line 402, and a module selection control line 403, all connected to logic circuit 207a of antenna multiplexer board 207. Logic circuit 207a includes NOR gates and NAND gates. X/Y selection control line 401 controls the selection of X antenna or Y antenna by antenna multiplexer board 207, multiplexer selection control line 402 selects multiplexer 207c or 207c of antenna multiplexer board 207, which only one multiplexer is selected at any give time, and module selection control line 403 controls the selection of antenna multiplexer board 207. Logic circuit 207a receives the control signal from microprocessor 209a of control board 209, and sends a control signal 404 to the selected multiplexer, either 207b or 207c.

Address lines A0-A2 of control board 209 are for controlling the address of multiplexer 207b, 207c of antenna multiplexer board 207. Because the multiplexers on antenna multiplexer board 207 are 3-to-8, three address lines are required for the address. Multiplexer 207b, 207c uses array antenna selector 207d to select an antenna of either X-axis or Y-axis of physical antenna web 203. The selected antenna receives the current signal induced by the electromagnetic field of the electromagnetic pen, and transmits the induced current signal 405 through antenna multiplexer board 207 to control board 209 for signal amplification and processing. Address lines A0-A2 are shared by multiplexers 207b,207c.

It is worth noticing that antenna multiplexer board 207 includes only passive multiplexers, but no microprocessor 209a or a controller. Therefore, the On/OFF of each antenna of physical antenna web 203 is for control board 209 to issue control signals, which are transmitted through control lines 401-403 to antenna multiplexer board 207. Because antenna multiplexer board 207 has logic circuit 207a and multiplexers 207b, 207c to realize array antenna selector 207d, the input/output pins of control board 209 and the layout of control lines can be simplified to reduce the noise and lower the manufacture cost while increasing the writing region of the digital board.

The ON/OFF of each antenna loop of physical antenna web 203 is entirely controlled by the multiplexers and the logic circuit. Only an antenna loop will be selected at any given time, and the remaining antennas will not generate any induced current. All the antenna loops are independent, and will not interfere with each other. As the length, size and the number of loops are identical for each antenna loop, therefore, the induced signal and quality are effectively controlled.

The serial antenna multiplexer boards of the large-sized digital board not only selects the antenna of the physical antenna web, but also propagate the signals forward to the next antenna multiplexer board, acting as a signal bus. In the mean time, the induced signals generated by the antenna of physical antenna web are propagated through antenna multiplexer board to the analog amplifier of control board.

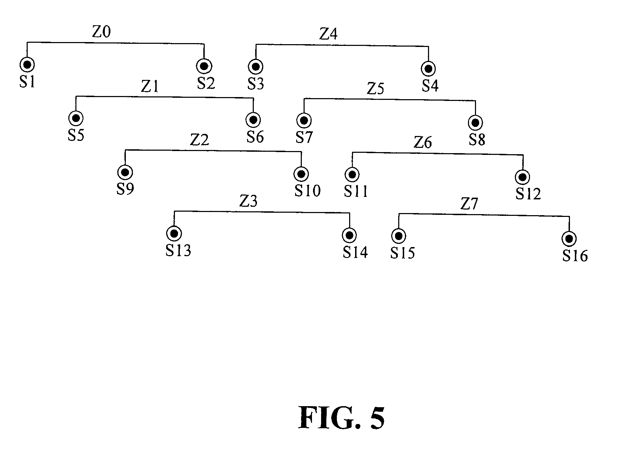

As shown in the embodiment of FIG. 3, when the solder point distance on antenna multiplexer board 207 is determined, the solders points and spacing on antenna turning boards 205 are also determined. FIG. 5 shows a schematic view of an embodiment the loop of antenna turning boards. As shown in FIG. 5, the antenna turning board includes 16 solder points S1-S16, and 8 loop wires Z0-Z7. The two ends of 8 loop wire Z0-Z7 are connected to 16 solder points, respectively.

The 8 loop wires Z0-Z7 are to keep the wire on the digital board to stay perpendicular at the turning points to avoid signal interference. For example, when two antenna wires are connected to solder points S1, S2 of loop wire Z0, loop wire Z0 will keep the antenna wires perpendicular.

Antenna turning board 205 and antenna multiplexer board 27 have the same length, and the length and the width of the digital board is a multiple of the length of the antenna turning board. Therefore, the antenna turning boards and antenna multiplexer boards can be used to form a frame of a large-sized digital board.

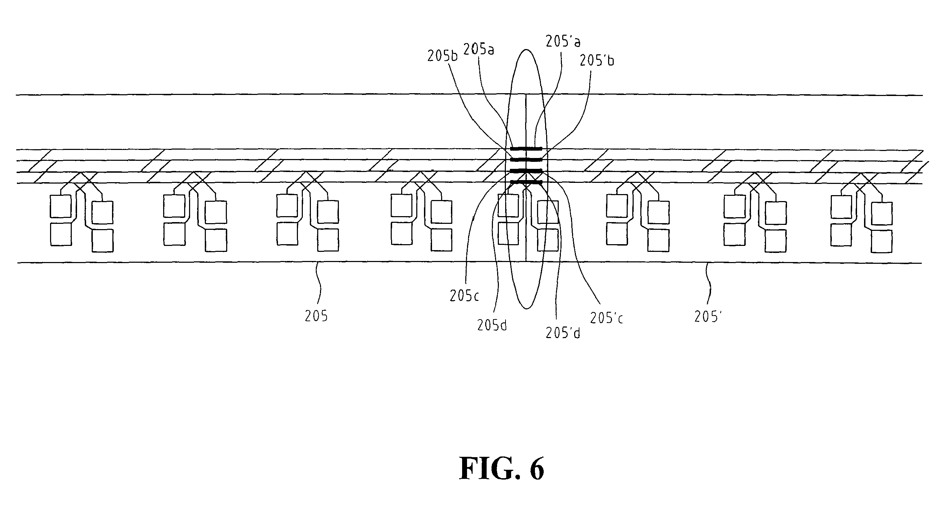

FIG. 6 shows a schematic view of an embodiment describing two neighboring antenna turning boards having reserved solder points for connecting the antenna cutting. As shown in FIG. 6, two neighboring antenna turning boards 205, 205' have four reserved solder points 205a-205d, 205'a-205'd on the front and the back of antenna cutting, respectively. The four solder points of the back of antenna turning boards 205, 205a are not shown in FIG. 6. Therefore, two neighboring antenna turning boards 205, 205a can be solder together or pressed together to form connections.

Similarly, two neighboring antenna multiplexer boards 207 have reserved solder points for connecting the antenna cutting for signal propagation. Therefore, two neighboring multiplexer turning boards can be solder together or pressed together to form connections.

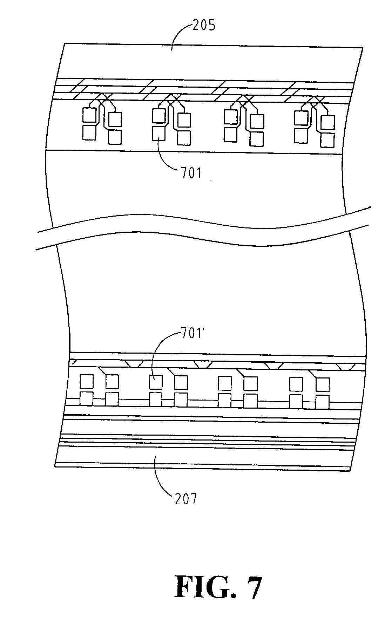

FIG. 7 shows a schematic view of the correspondence between antenna turning boards and antenna multiplexer boards for assembly of the present invention. As shown in FIG. 7, the top frame edge is formed by antenna turning boards 05, and the bottom frame edge is formed by antenna multiplexer boards 207. Antenna turning boards 205 and antenna multiplexer boards 207 having corresponding solder points 701, 701'. The solder points 701, 701' must be accurately aligned to prevent the digital board from malfunction. This schematic view only shows the corresponding positions of the antenna turning boards and the antenna multiplexer boards, but the details on each board is not shown.

It is worth noticing that the wire of the physical antenna web is not limited to any specific material or thickness. The preferred material is the wire that is standard or low in impedance. As the antenna wire is made of insulated wire, the physical antenna wire can be freely stacked without the limitation of the PCB. When an antenna requires more loops, no horizontal shift will occur because of more loops. This also improves the accuracy of the induced signals, and the precision of coordinate resolution.

The antenna board for fixing the physical antenna web can be made of FR1 or FR4 glass fiber, PET, PVC, PS, or plastic thin film.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1.   A large-sized electromagnetic digital board with segmented frame antenna, comprising:

    at least an antenna turning board, providing a plurality of solder points for a single wire to form a closed loop and generate electromagnetic current;
    at least an antenna multiplexer board, having least a solder point, and further comprising a logic circuit, an array antenna selector, an induced current input/output circuit, and at least a multiplexer;
    a physical antenna web, a two-dimensional evenly spaced array antenna formed by a single core or multi-core wire routing between said antenna turning boards and said antenna multiplexer boards; and
    a control board, having a control circuit and a microprocessor.

2.   The digital board as claimed in claim 1, wherein said physical antenna web, said antenna turning boards, and said antenna multiplexer boards are connected by connectors, directly soldered, or pressed together for connections.

3.   The digital board as claimed in claim 1, wherein said wire of said physical antenna web is an insulated wire.

4.   The digital board as claimed in claim 1, wherein every two said solder points of said antenna turning boards are connected by a wire to form a plurality of U-shaped loop wires with perpendicular angles.

5.   The digital board as claimed in claim 1, wherein said antenna turning boards have the same layout and can be arranged in non-specific order.

6.   The digital board as claimed in claim 1, wherein said antenna multiplexer boards have the same layout and can be arranged in non-specific order.

7.   The digital board as claimed in claim 1, wherein said antenna turning board and said antenna multiplexer board reserve at least a solder point close to the edge of antenna cutting for providing connection of two neighboring said antenna turning broads, and two neighboring said antenna multiplexer boards.

8.   The digital board as claimed in claim 1, wherein said antenna multiplexer board can propagate singles to next said antenna multiplexer board.

9. The digital board as claimed in claim 1, wherein said spacing between said solder points on said antenna multiplexer boards is equal to the antenna loop width divided by the loop multiplicity, where multiplicity is the number of divisions of each antenna loop.

10. The digital board as claimed in claim 9, wherein the numbers of and the spacing between said solder points on said antenna turning boards and said solder points on said antenna multiplexer boards are the same.

11. The digital board as claimed in claim 1, wherein said the length of and the width of said digital board is a multiple of the length of said antenna turning board and said antenna multiplexer board.

12. The digital board as claimed in claim 1, wherein only one said multiplexer is selected at any given time among all said multiplexers of said antenna multiplexer boards.

13. The digital board as claimed in claim 12, wherein only an antenna wire is selected at any given time among all said antenna multiplexer boards.

14. The digital board as claimed in claim 1, wherein said digital board is an electronic white board.

FIG. 1 (PRIOR ART)

EP 1 956 470 A1

**FIG. 2**

EP 1 956 470 A1

FIG. 3

EP 1 956 470 A1

**FIG. 4**

FIG. 5

FIG. 6

FIG. 7

**European Patent Office**

**EUROPEAN SEARCH REPORT**

Application Number

EP 07 00 2883

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 4 734 546 A (LANDMEIER WALDO L [US]) 29 March 1988 (1988-03-29) | 1 | INV. G06F3/046 |
| A | * abstract; figures 1-3 * <br> * column 2, line 55 - line 66 * <br> * column 3, line 49 - column 5, line 64 * <br> ----- | 2-14 | |
| Y | EP 0 278 484 A2 (ARISTO GRAPHIC SYSTEME [DE]) 17 August 1988 (1988-08-17) | 1 | |
| A | * abstract; figure 2 * <br> * column 1, line 31 - line 45 * <br> ----- | 2-8 | |

**TECHNICAL FIELDS SEARCHED (IPC)**

G06F

The present search report has been drawn up for all claims

| Place of search | Date of completion of the search | Examiner |
|---|---|---|
| Munich | 16 July 2007 | Pfaffelhuber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 00 2883

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2007

| Patent document cited in search report | | Publication date | Patent family member(s) | | Publication date |
|---|---|---|---|---|---|
| US 4734546 | A | 29-03-1988 | CA | 1279119 C | 15-01-1991 |
| | | | EP | 0362211 A1 | 11-04-1990 |
| | | | JP | 2500225 T | 25-01-1990 |
| | | | JP | 5045977 B | 12-07-1993 |
| | | | SG | 96992 G | 04-12-1992 |
| | | | WO | 8807247 A1 | 22-09-1988 |
| EP 0278484 | A2 | 17-08-1988 | DE | 3704498 A1 | 25-08-1988 |

EPO FORM P0459

For more details about this annex : see Official Journal of the European Patent Office, No. 12/82